(19) Europäisches Patentamt
European Patent Office
Office européen des brevets

(11) **EP 1 515 863 B1**

(12) **EUROPÄISCHE PATENTSCHRIFT**

(45) Veröffentlichungstag und Bekanntmachung des Hinweises auf die Patenterteilung:
**14.08.2013 Patentblatt 2013/33**

(21) Anmeldenummer: 03714609.9

(22) Anmeldetag: **01.05.2003**

(51) Int Cl.:
***B60J 7/12*** *(2006.01)*

(86) Internationale Anmeldenummer:
**PCT/CH2003/000281**

(87) Internationale Veröffentlichungsnummer:
**WO 2004/000592 (31.12.2003 Gazette 2004/01)**

(54) **FLUIDISCHE SPANNVORRICHTUNG**

FLUIDIC TENSIONING DEVICE

DISPOSITIF DE SERRAGE FLUIDIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **25.06.2002 CH 109102**

(43) Veröffentlichungstag der Anmeldung:
**23.03.2005 Patentblatt 2005/12**

(73) Patentinhaber: **Prospective Concepts AG 8152 Glattbrugg (CH)**

(72) Erfinder:
• **STOLL, Kurt**
  **CH-2515 Prêle BE (CH)**

• **KEREKES, Laszlo**
  **CH-8037 Zürich (CH)**

(74) Vertreter: **Stump, Beat**
**Stump & Partner AG**
**Patentanwälte AG**
**Dufourstrasse 116**
**8008 Zürich (CH)**

(56) Entgegenhaltungen:
**DE-C- 19 630 856    US-A- 3 499 680**
**US-B1- 6 193 299**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Spannvorrichtung für flächenhafte Gebilde, welche mittels eines Fluids betätigt wird, nach dem Oberbegriff des Patentanspruches 1.

Flächenhafte Gebilde, wie LKW-Planen, Sonnensegel, Kino-Grossleinwände, also im Wesentlichen ebene Einrichtungen zumeist textiler Natur, aber auch mehrachsig gekrümmte Flächen, wie Zeltdächer, beispielsweise von Ausstellungshallen, müssen gespannt und oft nachgespannt werden. Dies geschieht in aller Regel so, dass an der Berandung des textilen Werkstoffes Ösen angebracht sind, durch welche Spannseile oder -Gurte gezogen werden, mit deren Hilfe das flächenhafte Gebilde gegen einen Rahmen, ein Gestell, oder allgemein, gegen eine statische Struktur gezogen und damit gespannt wird.

Die gattungsbildende DE 196 30 856 zeigt eine fluidische Spannvorrichtung für flächige Gebilde de die auf einer vom flächigen Gebilde zu verhüllenden struktur aufsetzt.

Die WO 91/19618 zeigt ein faltbares Fahrzeugdach, das im Betrieb auf unter Druck stehenden Schläuchen aufliegt, wobei die Schläuche wiederum in Ausnehmungen eines Überrollbügels fixiert sind. Dadurch ist zwar eine steife, das Dach tragende Struktur gegeben, die Spannung des Dachs aber nicht einstellbar.

Die US 3 499 680 zeigt eine für einen Landwirtschaftswagen geeignete Plane, die über einem Ladebehälter abgerollt werden kann, so dass sie diesen bedeckt oder aufgerollt werden kann, so dass der Behälter freigegeben ist. Das Abrollen erfolgt gegen den Druck einer Rollfeder, das Aufrollen durch deren Federdruck. Das Abrollen wird durch mit Luft gefüllte Druckschläuche erzwungen, die sich über die Länge der Plane erstrecken. Das Aufrollen erfolgt dadurch, dass die Luft aus den Schläuchen entleert wird. Zum Verhindern von Falten in der Plane sind Haltestanden vorgesehen. Die ausgerollte Plane kann an den Seiten des Behälters festgelegt und dadurch gespannt werden.

Mit dieser konventionellen Spannmethode gehen mehrere Nachteile einher: Die punktförmige Krafteinleitung bei den Ösen führt zu Verzug und damit Faltenbildung beim textilen Werkstoff; ein allenfalls notwendiges Nachspannen des flächenhaften Gebildes aufgrund von beispielsweise Wärmedehnung ist aufwändig und mühsam und wird daher gerne unterlassen; eine gleichmässige Spannung des Gebildes ist oft nur durch mehrmaliges - und allenfalls lokales - Nachspannen zu erzielen.

Die vorliegende Erfindung hat zur Aufgabe eine Spannvorrichtung für solche flächenhafte Gebilde zu schaffen, welche die genannten Nachteile überwindet, welche kostengünstig hergestellt und einfach betrieben oder betätigt werden kann.

Die Lösung der gestellten Aufgabe ist wiedergegeben im kennzeichnenden Teil des Patentanspruches 1 hinsichtlich ihrer wesentlichen Merkmale, in den folgenden Patentansprüchen hinsichtlich weiterer vorteilhafter Ausbildungen.

Anhand der beigefügten Zeichnung wird die Erfindung näher erläutert. Es zeigen.

Fig. 1      ein erstes Ausführungsbeispiel einer isometrischen Darstellung,

Fig. 2a,b   das Ausführungsbeispiel im Querschnitt in zwei Betriebszuständen,

Fig. 3      eine schematische Darstellung eines Querschnittes,

Fig. 4      eine Einhängeeinrichtung im Querschnitt,

Fig. 5      ein zweites Ausführungsbeispiel in einer Draufsicht,

Fig. 6      ein drittes Ausführungsbeispiel in einer Isometrie

Fig. 7a,b   ein viertes Ausführungsbeispiel als Hubvorrichtung in Seitenansicht und Querschnitt.

Fig. 8      eine Variante zu Fig. 7a, b,

Fig. 9      eine Variante und Ergänzung zum Ausführungsbeispiel gemäss Fig. 8.

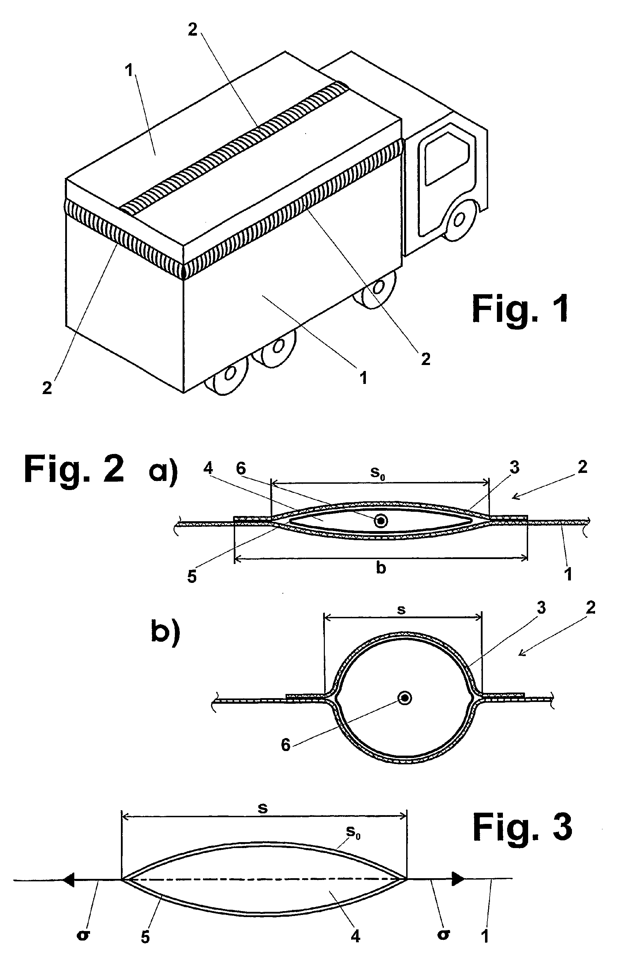

Fig. 1 ist die isometrische Darstellung eines Lastwagens mit einem Aufbau, welcher durch Planen 1 geschlossen wird. Dem Stande der Technik entsprechend weisen solche Planen 1 entlang ihres unteren Randes entweder eine Vielzahl von Riemen und Schnallen auf, mit welchen die Plane an einer längs einer parallel zur Brücke verlaufenden Stange befestigt und gespannt wird, oder es ist eine Vielzahl von Ösen im unteren Rande der Plane angebracht, durch welche ein langes Seil läuft, welches nach jeder Öse auch die genannte Stange umschlingt.

Erfindungsgemäss ist hier die Plane jedoch an der Brücke oder einem mit dieser verbundenen Element eingehängt oder mit wenigen Handgriffen einhängbar ausgeführt. Der sonst von den Riemen oder Seilen bewirkte Spannvorgang wird hier durch eine nachfolgend beschriebene Spannvorrichtung 2 bewirkt. Diese ist grundsätzlich gemäss der Darstellung von Fig. 2a, b aufgebaut: Die Plane 1, beispielsweise aus PVC-beschichtetem Polyestergewebe bestehend, ist längs eines Streifens 3 der Breite b durch Material der gleichen Art aufgedoppelt und mit der Plane 1 an den Rändern des Streifens 3 verbunden durch Kleben, Schweissen oder Nähen. Dadurch entsteht eine langgestreckte Tasche 4, in welche eine ebenso langgestreckte Blase 5 aus elastischem Kunststoff eingelegt ist. Selbstverständlich kann die Blase 5 auch in mehrere Teilstücke unterteilt sein. Im flachen Zustande hat die Tasche 4 eine Breite $s_o$. Die Blase 5 ist an ihren Enden fluiddicht verschlossen und trägt an mindestens einem Ende ein Ventil 6 für das Fluid, mit welchem sie beaufschlagt werden soll. In den meisten Fällen wird dies Druckluft sein; in besonderen Fällen kann jedoch die Verwendung anderer Gase oder von Flüssigkeit angezeigt sein. Mit dem Begriff des Fluids sind immer Gase und/oder Flüssigkeiten gemeint.

Wird nun die Blase 5 über das Ventil 6 mit dem Fluid beaufschlagt, so bläht sie sich auf und geht vom flachen, leeren Zustand zum vollen, nun im Querschnitt maximal annähernd kreisförmigen Zustande über. Dabei verkürzt sich die Breite der Tasche 4 von $s_o$ auf höchstens

$$ s = s_o \frac{2}{\pi} $$

wo s der Durchmesser des als kreisförmig angesehenen Querschnittes des Schlauches 5 bedeutet. Die abstrakt erzielbare Verkürzung der Spannvorrichtung beträgt also

$$ s_o - s = s_o \left( 1 - \frac{2}{\pi} \right) \cong s_o \cdot 0.36 $$

Wird die Breite $s_o$ zu beispielsweise 10 cm angenommen, so beläuft sich die abstrakt erzielbare Verkürzung auf 3.6 cm. Abstrakt bedeutet hier zunächst ohne die real erzielbare Formänderung des Schlauches 5 in Betracht zu ziehen.

Sollen der Fluiddruck, die Spannkraft pro Längeneinheit der Plane 1 (in der Richtung der Achse des Schlauches 5) und die Breite $s_o$ miteinander in Beziehung gesetzt werden, so gelten folgende Überlegungen, welche an Hand der Fig. 3 angestellt werden können, und welche jedem Fachmann geläufig sind:

Die Fig. 3 zeigt, in schematischer Art und unter Weglassung mehr werkstoffbedingter Einzelheiten, eine Zwischenstufe zwischen den in Fig. 2a und Fig. 2b dargestellten Extremlagen der Spannvorrichtung 2. Wird also die Blase 5 mit einem Fluid beaufschlagt, so bläht sie sich auf; die sie begrenzenden Teile der Plane 1 nehmen im Querschnitt Kreisbogenform an.

Die Spannkraft pro Längeneinheit (in Richtung der Längsstreckung der Streifen 3) $\sigma$ [N/m] ist dann aus naheliegenden Gründen proportional zum Druck und zur Breite $s_o$ des Streifens 3.

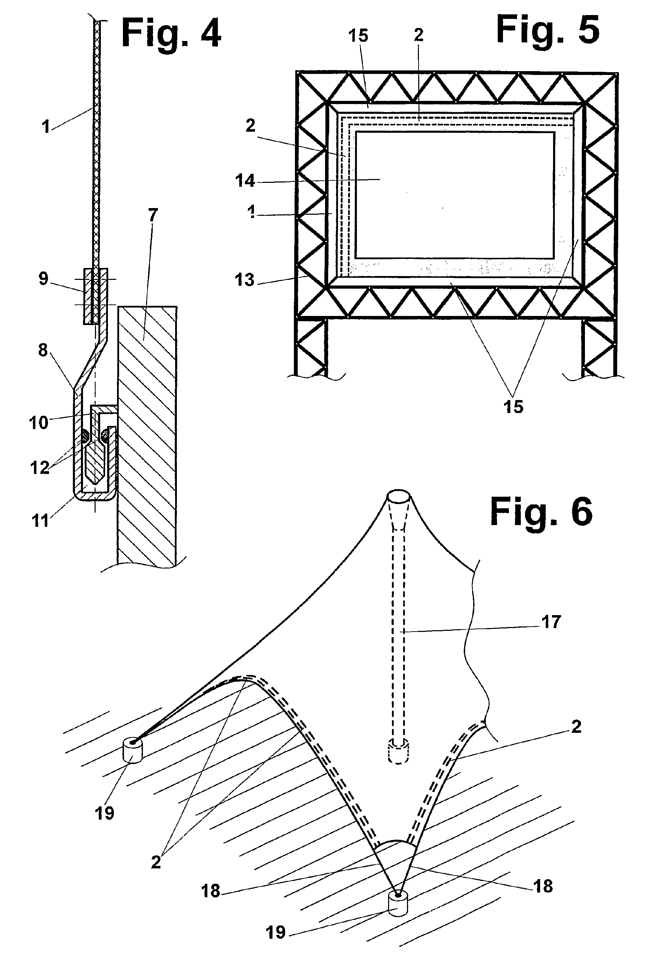

Die in der Praxis erzielbaren relativen Verkürzungen $\dfrac{\Delta s}{s_o}$ liegen vorzugsweise im Bereich von etwa 0,2 bis 0,3. Die Extrem-lage mit $\dfrac{\Delta s}{s_o} = 0,36$ ist kräftemässig ungünstig, da bei dieser Lage die erzielbare Spannung $\sigma$ gegen Null geht. Sollte die notwendige Verkürzung für einen bestimmten Zweck zu unpraktisch grossen Breiten $s_o$ führen, so können selbstverständlich zwei oder drei - oder allgemein: mehrere - solcher Spannvorrichtungen gemäss Fig. 2a, b, 3 nacheinander angeordnet und vorzugsweise mit dem gleichen Fluiddruck beaufschlagt werden. In Fig. 4 ist ein Querschnitt durch eine an einem Lastwagen anzubringende Einhängeeinrichtung dargestellt. Die Aufgaben dieser Einhängeeinrichtung sind einerseits die gleichförmige Einleitung der Spannung $\sigma$ in den Aufbau des Lastwagens, beispielsweise einer Seitenplanke 7 der Brücke des Lastwagens, anderseits das Sicherstellen der Verbindung von Plane 1 und Seitenplanke 7 auch im drucklosen Zustande der Spannvorrichtung. Unter dem Begriff Seitenplanke ist auch die am Heck der Brücke angeordnete Planke zu verstehen. Am unteren Rand der Plane 1 ist ein im Wesentlichen über den ganzen unteren Rand der Plane 1 sich erstreckendes, im Querschnitt hakenförmiges Element 8 befestigt, beispielsweise mit einer ebenfalls langgestreckten Gegenplatte 9, welche mit dem oberen Rande des Elementes 8 verschraubt oder vernietet ist. Andere Arten der Verbindung sind ebenfalls im Erfindungsgedanken eingeschlossen. An der Seitenplanke sind entweder eine Vielzahl nach unten gerichteter Dorne 10 befestigt, oder eine ebenfalls langgestreckte Halterung mit dornartigem Querschnitt. Dieser Querschnitt ist so gestaltet, dass er sich nach unten verbreitert und anschliessend zu einer Spitze zusammenläuft.

Das im Querschnitt hakenförmige langgestreckte Element 8 ist in seinem unteren Teil als Rinne 11 ausgebildet, und die Dorne 10 so ausgeführt, dass sie mit wenig Spiel in diese Rinne passen. Am oberen Rande dieser Rinne 11 sind Federelemente 12 eingesetzt, welche über den Verbreiterungen der Dorne 10 einschnappen; so ist die Plane 1 mit der Seitenplanke 7 verbunden, auch wenn die Spannung $\sigma$ auf der Plane 1 abgebaut ist. Für den Aufbau der Einhängeeinrichtung ist es von Vorteil, wenn die Dorne 10 in der gleichen Ebene liegen, wie die gespannte Plane 1. Damit entsteht kein Drehmoment auf die Einhängeeinrichtung.

Fig. 5 ist die Darstellung eines zweiten Anwendungsbeispiels der erfindungsgemässen Spannvorrichtung. Beispielsweise in einem Fachwerkrahmen 13 ist eine Kinoleinwand 14 eingespannt. Insbesondere bei Freilichtkinos, wie sie oft im Sommer temporär eingerichtet werden, ist die Leinwand 14 grossen Temperaturschwankungen unterworfen, welche bei Synthetikgeweben zu beträchtlichen Dimensionsänderungen führen.

Im dargestellten Ausführungsbeispiel ist die Leinwand 14 mit den zu Fig. 3 beschriebenen Mitteln befestigt an vier flachen, stabartigen Elementen 15, welche ausgeführt sein können, wie die hakenförmigen Elemente 8 aus Fig. 4.

Beim vorliegenden Ausführungsbeispiel sind, anschliessend an die stabartigen Elemente 15, zwei Spannvorrichtungen 2 gemäss Fig. 1, 2 eingesetzt, je eines beispielsweise beim oberen, ein zweites beim linken Element 15. Selbstverständlich können auch vier solcher Spannvorrichtungen 2 vorgesehen werden, je eines auf jeder Seite der Leinwand 14. Zum Spannen der Leinwand 14 werden die eingesetzten Spannvorrichtungen 2 unter Druck gesetzt, was für die Dauer einer Filmvorführung notwendig ist. Die restliche Zeit kann die Leinwand 14 entspannt bleiben.

Ein drittes Anwendungsbeispiel für die erfindungsgemässe Spannvorrichtung zeigt Fig. 6. Ein Zeltdach 16 für beispielsweise eine Ausstellung oder eine Festhalle wird aufgerichtet durch eine zentrale Stütze 17 (gestrichelt dargestellt). Von dieser ist das Zeltdach 16 auf allen Seiten nach unten gezogen und wird durch mehrere in den unteren Saum des Zeltdaches 16 eingelassene Spannkabel 18 gespannt und in Sockeln 19 verankert. Die durch die Spannkabel 18 erzielbare Spannung hat sich nach einer unteren Temperatur zu richten, da sich die für solche Zeltdächer 16 üblicherweise verwendeten Textilien bei Temperaturerhöhung stark dehnen. Wird die Spannung bei hoher Temperatur richtig eingestellt, so besteht bei starker Abkühlung die Gefahr der Überdehnung und des Reissens des Zeltdaches 16. Um die optimale Spannung bei jeder Betriebstemperatur sicherstellen zu können, sind an allen unteren Rändern des Zeltdaches 16, vorzugsweise benachbart zu den Spannkabeln 18, Spannvorrichtungen 2 vorgesehen. Diese können, wie auf der linken Seite von Fig. 6 dargestellt, segmentiert sein, oder, wie auf der rechten Seite von Fig. 6, sich im Wesentlichen über die ganze Länge eines Spannkabels erstrecken. Nicht dargestellt sind die Druckluft-Leitungen (oder allgemein: Leitungen für das Fluid). Diese werden vorzugsweise parallel zu den Spannkabeln dem unteren Rande des Zeltdaches 16 entlanggeführt und beispielsweise bei den Sokkeln 19 an Unterflur-Leitungen angeschlossen.

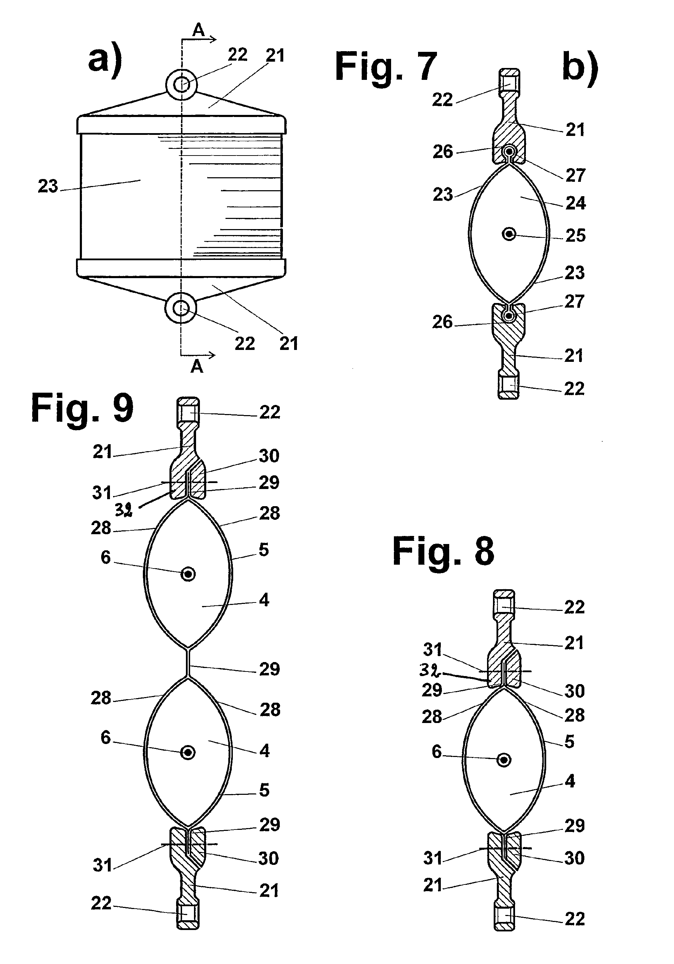

Ein weiteres Ausführungsbeispiel des Erfindungsgedankens in Form einer Hebevorrichtung zeigen Fig. 7a, b, wo Fig. 7a eine Draufsicht, Fig. 7b einen Schnitt AA darstellt: Zwischen zwei Tragteile 21, beispielsweise mit je einem Auge 22 zur Einleitung von Punktlasten, erstreckt sich mit der Längsachse quer zur Kraftrichtung eine schlauchartige Tasche 23 aus einem textilen Material vorzugsweise grosser Zugkraft und kleiner Dehnbarkeit. In die Tasche 23 ist eine Blase 24 eingelegt, welche durch ein Ventil 25 mit Fluiddruck beaufschlagt werden kann. Die Blase 24 ist beispielsweise aus einem elastischen Kunststoff gefertigt, wobei dann die Blase 24 an ihren Enden - bis auf eine Öffnung für das Ventil 25 - verschlossen sein muss. Alternativ kann die Blase 24 aus einem fluiddicht beschichtetem textilen Material bestehen oder - subalternativ - aus elastischem Kunststoff bestehend in einer weiteren textilen Tasche untergebracht sein.

Jedes der Tragteile 21 weist eine im Querschnitt im Wesentlichen kreisrunde Nut 26 auf, in welche die Tasche 23 hineingestülpt wird. Der so eingestülpte Teil der Tasche wird durch einen Rundstab 27, welcher mit Spiel in die Nut 26 und den eingestülpten Teil der Tasche 23 eingebracht wird, festgeklemmt.

Anstelle von textilem Material für die Tasche können auch andere geeignete, also flexible und dehnungsarme Materialien verwendet werden, wie beispielsweise Folien aus Federstahl. Dabei ist durch geeignet grosse Radien von Nut 26 und Rundstab 27 dafür gesorgt, dass keine Knickstellen entstehen. Eine Variante zum Ausführungsbeispiel gemäss Fig. 7a, b ist in Fig. 8 dargestellt im Schnitt durch die Augen 22. Zwei Bahnen 28 eines wenig dehnbaren textilen Materials sind beispielsweise durch Nähen oder Schweissen miteinander verbunden an linearen Verbindungsstellen 29. In die entstehende Tasche 4 ist wiederum eine Blase 5 eingelegt, welche entweder selbst aus fluiddichtem textilen Material kleiner Dehnung besteht, oder aufgebaut ist aus einer weiteren textilen Tasche kleiner Dehnbarkeit, welche eine Blase 5 aus einem elastischen Kunststoff enthält. Die Blase 5 kann über das Ventil 6 mit einem Druckfluid beaufschlagt werden; bei der Lösung mit der weiteren Tasche, weist diese eine Öffnung für das Ventil 6 auf. Die beiden Bahnen 28 sind an ihren Enden in zwei Tragteilen 21 befestigt, wobei hier die Tragteile 21 so ausgeführt sind, dass die Bahnen geklemmt werden: Ein Klemmschenkel 30 ist frei beweglich und wird mit Schrauben 31 an einem fest mit dem Tragteil 21 verbundenen zweiten Klemmschenkel 32 befestigt. Zwischen diesen Klemmschenkeln 30, 32 werden die Bahnen 28 auf ihrer ganzen Breite festgeklemmt.

Fig. 9 zeigt eine Variante zum Ausführungsbeispiel gemäss Fig. 8. Hier sind die Bahnen 28 so lang gewählt, dass - durch eine weitere Verbindungsstelle 29 abgetrennt - zwei Taschen 4 entstehen mit gleichen Merkmalen wie nach Fig. 8. Selbstverständlich ist dieses Ausführungsbeispiel auf drei oder mehr Taschen 4 erweiterbar, so dass eine im unteren Auge 22 eingehängte Punktlast über eine solche Höhendifferenz gehoben werden kann, wie es die maximale Verkürzung der Hebevorrichtung gemäss Fig. 7, 8, 9 gestattet.

**Patentansprüche**

1. Fluidische Spannvorrichtung für flächige Gebilde, **dadurch gekennzeichnet, dass**

    - in die Fläche des zu spannenden Gebildes (1, 14, 16,) mindestens eine langgestreckte Tasche (4) eingearbeitet ist, welche sich im Wesentlichen über mindestens eine der Lineardimensionen des Gebildes (1, 14, 16) erstreckt,
    - mindestens eine fluiddichte langgestreckte Blase (5) mit einem Ventil (6) vorhanden und in die Tasche (4) eingelegt ist, dergestalt, dass die Blase (5) mit einem Fluid unter Druck gesetzt werden kann und sich dabei bläht, und die Tasche (4) durch die geblähte Blase (5) ebenfalls gebläht wird, wodurch sich deren quer zu ihrer Längserstreckung verlaufende Dimension verkürzt, und das genannte flächige Gebilde (1, 14, 16) damit mit einer Spannung σ [N/m] gespannt wird.

2. Fluidische Spannvorrichtung nach Patentanspruch 1, **dadurch gekennzeichnet, dass** das flächige Gebilde (1, 14, 16) aus einem textilen Gewebe besteht und die Tasche (4) durch Aufdoppelung des Gewebes über eine Breite $s_o$ erzeugt ist.

3. Fluidische Spannvorrichtung nach Patentanspruch 1, **dadurch gekennzeichnet, dass** die Blase (5) aus einem fluiddichten textilen Gewebe besteht.

4. Fluidische Spannvorrichtung nach Patentanspruch 1, **dadurch gekennzeichnet, dass** die Blase (5) aus einem elastischen Kunststoff besteht.

5. Fluidische Spannvorrichtung nach Patentanspruch 4, **dadurch gekennzeichnet, dass** die Blase (5) aus elastischem Kunststoff in eine weitere Tasche aus einem textilen Gewebe eingelegt ist die ihrer seils in die langgestreckte Tasche (4); eingelegt ist.

6. Fluidische Spannvorrichtung nach Patentanspruch 2, **dadurch gekennzeichnet, dass**

   - das flächige Gebilde eine Kinoleinwand (14) ist
   - diese Kinoleinwand (14) an ihren Rändern an stabartigen Elementen (15) befestigt ist,
   - die mindestens eine Tasche (4) benachbart zu einem der stabartigen Elemente (15) angeordnet ist.

7. Fluidische Spannvorrichtung nach Patentanspruch 2, **dadurch gekennzeichnet, dass**

   - das flächige Gebilde eine Plane (1) eines Lastwagens ist,
   - jede Seite der Plane (1) im Wesentlichen über ihre ganze Länge mindestens eine Tasche (4) aufweist.

8. Fluidische Spannvorrichtung nach Patentanspruch 7, **dadurch gekennzeichnet, dass**

   - jede Seite der Plane (1) an ihrem unteren Ende im Wesentlichen über ihre ganze Länge in einer Einhängeeinrichtung befestigbar ist, mit welcher die Spannung σ der Plane (1) im Wesentlichen über ihre ganze Länge eingeleitet werden kann,
   - die Einhängeeinrichtung Mittel aufweist, welche erzwingen, dass die Plane (1) auch im entspannten Zustande eingehängt bleibt.

9. Fluidische Spannvorrichtung nach Patentanspruch 8, **dadurch gekennzeichnet, dass**

   - die Einhängeeinrichtung aus einem sich im Wesentlichen über den ganzen unteren Rand der Plane (1) erstreckenden, im Querschnitt hakenförmigen Element (8) besteht, welches in seinem unteren Teil als Rinne (11) ausgebildet ist, und das im Querschnitt haken-förmige Element (8) auf seiner ganzen Länge mit dem unteren Rand der Plane (1) verbunden ist,
   - die Rinne so ausgebildet ist, dass eine Vielzahl von Dornen (10) die mit Seitenplanken (7) der Brücke des Lastwagens verbunden sind, in sie eingreifen können,
   - der obere Rand der Rinne (11) Federelemente (12) aufweist, welche über Verbreiterungen an den Dornen (10) einschnappen können, dergestalt, dass die Plane (1) mit den Seitenplanken (7) der Brücke verbunden beiben kann, auch wenn die Spannung σ auf der Plane (1) abgebaut ist.

10. Fluidische Spannvorrichtung nach Patentanspruch 8, **dadurch gekennzeichnet, dass** auch die Heckseite der Plane (1) mit einer Einhängeeinrichtung versehen ist.

11. Fluidische Spannvorrichtung nach Patentanspruch 7, **dadurch gekennzeichnet, dass** die Plane (1) auch eine Dachseite aufweist mit einer Tasche (4).

12. Fluidische Spannvorrichtung nach einem der Patentansprüche 2 bis 5, **dadurch gekennzeichnet, dass** das flächige Gebilde ein Zeltdach (16) ist.

13. Fluidische Spannvorrichtung nach Patentanspruch 12 **dadurch gekennzeichnet, dass**

   - das Zeltdach (16) durch eine Stütze (17) aufgerichtet und durch in den unteren Saum des Zeltdaches (16) eingelassene Spannkabel (18) nach unten gespannt ist,
   - die Spannvorrichtungen (2) benachbart zu den Spannkabeln (18) angebracht sind.

14. Fluidische Spannvorrichtung nach einem der Patentansprüche 2 bis 5, **dadurch gekennzeichnet, dass**

   - das flächige Gebilde im Wesentlichen nur aus der mindestens einen langgestreckten Tasche (4) besteht,
   - von der mindestens einen langgestreckten Tasche (4) die äussersten Taschen (4) im Wesentlichen entlang ihrer ganzen Länge an je einem Tragteil (21) befestigt sind, wobei die Tragteile (21) auf ihren von den Taschen abgewandten Seiten zur Einleitung von Punktlasten eingerichtet sind, so dass beim Druckbeaufschlagen der Blasen (5) eine Verkürzung des Abstandes der Tragteile (21) eintritt und, damit verbunden, eine Zugkraft auftreten kann.

**15.** Fluidische Spannvorrichtung nach Patentanspruch 14 **dadurch gekennzeichnet, dass** die Tragteile (21) auf ihren den Taschen (4) zugewandten Seiten je Mittel aufweisen zum Festklemmen der mindestens einen Tasche (4).

**16.** Fluidische Spannvorrichtung nach Patentanspruch 15 **dadurch gekennzeichnet, dass**

- die Tragteile auf ihren den Taschen (4) zugewandten Seiten je eine Nut (26) von im Wesentlichen kreisrunden Querschnitt aufweisen, die sich im Wesentlichen über die ganze Länge des Tragteils (21) erstreckt, in welche Nuten (26) das Material der den Tragteilen benachbarten Taschen (4) eingestülpt werden kann,
- zwei Rundstäbe (27) vorhanden sind zum Einschieben in die Nuten (26) und zum Festklemmen der in die Nuten (26) eingestülpten Teile der Taschen (4).

**17.** Fluidische Spannvorrichtung nach Patentanspruch 15 **dadurch gekennzeichnet, dass**

- jedes Tragteil (21) auf seiner der Taschen (4) zugewandten Seite einen mit ihm fest verbundenen ersten Klemmschenkel (32) aufweist,
- je ein zweiter, frei beweglicher Klemmschenkel (30) vorhanden ist, welcher am ersten Klemmschenkel (32) mittels Schrauben (31) befestigt werden kann,
- die Taschen (4) aus zwei Bahnen (28) eines wenig dehnbaren textilen Materials bestehen, welche mindestens an zwei linearen Verbindungsstellen (29) miteinander verbunden sind,
- zwei der linearen Verbindungsstellen (29) zwischen die je zwei Klemmschenkel (30, 32) eingeklemmt werden,
- zwischen je zwei der linearen Verbindungsstellen (29) je eine Blase (5, 24) eingeschoben ist, welche durch ihr Ventil (6) mit Druck beaufschlagt werden kann, wodurch eine Verkürzung des Abstandes der Tragteile (21) eintritt und, damit verbunden, eine Zugkraft auftreten kann.

**Claims**

**1.** A fluid tensioning device for laminar structures, **characterized in that**

- in the surface of the structure (1, 14, 16) to be tensioned, at least one longitudinally extending pocket (4) is incorporated, which extends substantially over at least one of the linear dimensions of the structure (1, 14, 16),
- at least one fluid-dense, longitudinally extending pouch (5) which is provided with a valve (6) and inserted into the pocket (4), embodied such that the pouch (5) can be placed under pressure with a fluid and inflates, such that the pocket (4) likewise is inflated by the inflated pouch (5), whereby its dimension running transverse to its longitudinal extension shortens, and the laminar structure (1, 14, 16) is thereby tensioned with a tensioning σ [N/m].

**2.** The fluid tensioning device according to claim 1, **characterized in that** the laminar structure (1, 14, 16) comprises a textile material and the pocket (4) is produced by doubling the material over a width so.

**3.** The fluid tensioning device according to claim 1, **characterized in that** the pouch (5) comprises a fluid-dense textile material.

**4.** The fluid tensioning device according to claim 1, **characterized in that** the pouch (5) comprises an elastic plastic.

**5.** The fluid tensioning device according to claim 4, **characterized in that** the pouch (5) made of elastic plastic is inserted in a further pocket made from a textile material, which for its part is inserted in the longitudinally extending pocket (4).

**6.** The fluid tensioning device according to claim 2, **characterized in that**

- the laminar structure is a movie screen (14),
- the movie screen (14) is attached on its edges to rod-like elements (15),
- the at least one pocket (4) is arranged adjacent to one of the rod-like elements (15).

**7.** The fluid tensioning device according to claim 2, **characterized in that**

- the laminar structure is a canvas cover (1) of a truck,
- each side of the canvas cover (1) has at least one pocket (4) essentially over its entire length.

**8.** The fluid tensioning device according to claim 7, **characterized in that**

- each side of the canvas cover (1) on its lower ends can be attached in a hanging device essentially over its entire length, with which the tensioning σ of the canvas cover (1) can be fed in essentially over its entire length,

- the hanging device has means, which force the canvas cover (1) to remain hanging also in a non-tensioned state.

9. The fluid tensioning device according to claim 8, **characterized in that**

- the hanging device comprises a hook-shaped element (8) in cross section, extending essentially over the entire lower edge of the canvas cover (1), which is formed in its lower part as a channel (11), and the hook-shaped element (8) in cross-section is connected on its entire length with the lower edge of the canvas cover (1),
- the channel is constituted such that a plurality of thorns (10), which are connected with side planks (7) of the bridge of the truck, can engage in said channel,
- the upper edge of the channel (11) has spring elements (12), which can be snapped onto the thorns (10) via broadenings, such that the canvas cover (1) can remain connected with the side planks (7) of the bridge, also when the tensioning σ is no longer present on the canvas cover (1).

10. The fluid tensioning device according to claim 8, **characterized in that** also the rear side of the canvas cover (1) is provided with a hanging device.

11. The fluid tensioning device according to claim 7, **characterized in that** the canvas cover (1) also has a roof-side with a pocket (4).

12. The fluid tensioning device according to one of claims 2 through 5, **characterized in that** the laminar structure is a tent roof (16).

13. The fluid tensioning device according to claim 12, **characterized in that**

- the tent roof (16) is erected by means of a support (17) and is tensioned below by tensioning cables (18) inserted into the lower boundary of the tent cover (16),
- the tensioning devices (2) are mounted adjacent to the tensioning cables (18).

14. The fluid tensioning device according to one of claims 2 through 5, **characterized in that**

- the laminar structure essentially comprises only at least one longitudinally extending pocket (4),
- of the at least one longitudinally extending pocket (4), the outermost pockets (4) are attached essentially along their entire length to a respective support part (21), whereby the support parts (21) are arranged for introduction of spot-loads on their sides facing away from the pockets, so that upon pressure impingement of the pouches (5), a shortening of the distance of the support parts (21) occurs, and connected therewith, a traction force can take place.

15. The fluid tensioning device according to claim 14, **characterized in that** the support parts (21) on their sides facing the pockets (4) each have means for clamping the at least one pocket (4).

16. The fluid tensioning device according to claim 15, **characterized in that**

- the support parts on their sides facing the pockets (4) each have a groove (26) having an essentially circular cross section, which extends essentially over the entire length of the support part (21), into which grooves (26) the material of the pockets (4) adjacent to the support parts can be turned inside out,
- two bead mouldings (27) are provided for insertion in the grooves (26) and for clamping the parts of the pockets (4) turned inside-out in the grooves (26).

17. The fluid tensioning device according to claim 15, **characterized in that**

- each support part (21) has a first clamping leg (32) fixedly connected to it on its side facing toward the pockets (4),
- a respective second, freely moveable clamping leg (30) is provided, which can be attached to the first clamping leg (32) by means of screws (31),
- the pockets (4) comprise two channels (28) of a slightly expandable textile material, which are connected to one another at least at two linear connection points (29),
- two of the linear connection points (29) are clamped between the respective two clamping legs (30, 32),
- between a respective two of the linear connection points (29), a respective pouch (5, 24) is inserted, which can be impinged with pressure by means of a valve (6), whereby a shortening of the distance of the support parts (21) can take place, and connected therewith, a traction force can occur.

**Revendications**

1. Dispositif de serrage fluidique pour produits en nappe, **caractérisé en ce que**

- au moins une poche allongée (4) est aménagée dans la surface du produit (1, 14, 16) à tendre, laquelle poche s'étend sensiblement sur au moins l'une des dimensions linéaires du produit (1, 14, 16),
- au moins une bulle allongée (5) fluidique avec une soupape (6) étant présente, et étant insérée dans la poche (4) de manière à ce que la bulle (5) puisse être mise sous pression avec un fluide et se dilate ce faisant, et la poche (4) se dilatant également du fait de la bulle dilatée (5), moyennant quoi sa dimension s'étendant transversalement à son étendue longitudinale est raccourcie et ledit produit en nappe (1, 14, 16) étant ainsi tendu grâce à une tension σ [N/m].

2. Dispositif de serrage fluidique selon la revendication 1, **caractérisé en ce que** le produit en nappe (1, 14, 16) se compose d'un tissu textile et **en ce que** la poche (4) est produite par doublage du tissu sur une largeur $s_o$.

3. Dispositif de serrage fluidique selon la revendication 1, **caractérisé en ce que** la bulle (5) se compose d'un tissu textile étanche aux fluides.

4. Dispositif de serrage fluidique selon la revendication 1, **caractérisé en ce que** la bulle (5) se compose d'une matière synthétique élastique.

5. Dispositif de serrage fluidique selon la revendication 4, **caractérisé en ce que** la bulle (5) en matière synthétique élastique est insérée dans une autre poche en un tissu textile, laquelle est quant à elle insérée dans la poche allongée (4).

6. Dispositif de serrage fluidique selon la revendication 2, **caractérisé en ce que**

   - le produit en nappe est un écran de projection de cinéma (14)
   - cet écran de projection de cinéma (14) étant fixé au niveau de ses bords sur des éléments semblables à des tiges (15),
   - cette au moins une poche (4) étant disposée au voisinage de l'un des éléments semblables à des tiges (15).

7. Dispositif de serrage fluidique selon la revendication 2, **caractérisé en ce que**

   - le produit en nappe est une bâche (1) d'un camion,
   - chaque côté de la bâche (1) présentant sensiblement sur toute sa longueur au moins une poche (4).

8. Dispositif de serrage fluidique selon la revendication 7, **caractérisé en ce que**

   - chaque côté de la bâche (1) peut être fixé sur son extrémité inférieure, sensiblement sur toute sa longueur, dans un dispositif de suspension grâce auquel la tension ó de la bâche (1) peut être appliquée sensiblement sur toute sa longueur,
   - le dispositif de suspension présentant des moyens forçant la bâche (1) à rester suspendue également à l'état non tendu.

9. Dispositif de serrage fluidique selon la revendication 8, **caractérisé en ce que**

   - le dispositif de suspension se compose d'un élément en forme de crochet (8) en coupe transversale s'étendant sensiblement sur tout le bord inférieur de la bâche (1), lequel élément est réalisé en tant que goulotte (11) dans sa partie inférieure, et **en ce que** l'élément en forme de crochet (8) en coupe transversale est relié sur toute sa longueur au bord inférieur de la bâche (1),
   - la goulotte étant réalisée de manière à ce qu'une pluralité d'ardillons (10), lesquels sont en liaison avec des planches latérales (7) du pont du camion, puissent se mettre en prise dans celle-ci,
   - le bord supérieur de la goulotte (11) présentant des éléments de ressort (12), lesquels peuvent s'encliqueter via des élargissements sur les ardillons (10) de manière à ce que la bâche (1) puisse rester en liaison avec les planches latérales (7) du pont également lorsque la tension σ sur la bâche (1) est supprimée.

10. Dispositif de serrage fluidique selon la revendication 8, **caractérisé en ce que** le côté arrière de la bâche (1) est également muni d'un dispositif de suspension.

11. Dispositif de serrage fluidique selon la revendication 7, **caractérisé en ce que** la bâche (1) présente également un côté de toit avec une poche (4).

12. Dispositif de serrage fluidique selon l'une des revendications 2 à 5, **caractérisé en ce que** le produit en nappe est un toit de tente (16).

13. Dispositif de serrage fluidique selon la revendication 12, **caractérisé en ce que**

   - le toit de tente (16) est dressé grâce à un support (17) et est tendu vers le bas grâce à un câble de serrage (18) enfilé dans la doublure inférieure du toit de tente (16),
   - les dispositifs de serrage (2) étant aménagés au voisinage des câbles de serrage (18).

**14.** Dispositif de serrage fluidique selon l'une des revendications 2 à 5, **caractérisé en ce que**

- le produit en nappe se compose essentiellement seulement de cette au moins une poche (4) allongée,
- de cette au moins une poche allongée (4), les poches les plus à l'extérieur (4) étant fixées sensiblement le long de toute leur longueur au niveau d'un élément de support (21) respectif, les éléments de support (21) étant étudiés pour appliquer des charges ponctuelles sur leurs côtés tournant le dos aux poches, de sorte que lors de l'alimentation en pression des bulles (5), il y a un raccourcissement de l'espacement entre les éléments de support (21) et en lien avec cela, une force de traction pouvant apparaître.

**15.** Dispositif de serrage fluidique selon la revendication 14, **caractérisé en ce que** les éléments de support (21) présentent sur leurs côtés tournés vers les poches (4) respectivement des moyens pour fixer par serrage cette au moins une poche (4).

**16.** Dispositif de serrage selon la revendication 15, **caractérisé en ce que**

- les éléments de support présentent sur leurs côtés tournés vers les poches (4) respectivement une rainure (26) d'une section sensiblement circulaire, laquelle s'étend sensiblement sur toute la longueur de l'élément de support (21), dans lesquelles rainures (26) il est possible d'enfermer le matériau des poches (4) voisines des éléments de support,
- deux tiges rondes (27) étant présentes pour l'insertion dans les rainures (26) et pour fixer par serrage des parties des poches (4) enfermées dans les rainures (26).

**17.** Dispositif de serrage fluidique selon la revendication 15, **caractérisé en ce que**

- chaque élément de support (21) présente sur son côté tourné vers les poches (4) une première branche de serrage (32) reliée de manière fixe à celui-ci,
- respectivement une deuxième branche de serrage (30) librement mobile étant présente, laquelle peut être fixée sur la première branche de serrage (32) à l'aide de vis (31),
- les poches (4) se composant de deux bandes (28) d'un matériau textile peu extensible, lesquelles sont reliées ensemble au moins au niveau de deux points de jonction (29) linéaires,
- deux des points de jonction (29) linéaires étant serrés entre les deux bras de serrage (30, 32) respectifs,
- respectivement une bulle (5, 24) étant insérée entre respectivement deux des points de jonction linéaires (29), laquelle peut être mise sous pression grâce à sa soupape (6), moyennant quoi il y a un raccourcissement de l'espacement des éléments de support (21) et une force de traction pouvant apparaître en lien avec cela.

**Fig. 1**

**Fig. 2** a)

b)

**Fig. 3**

Fig. 4

Fig. 5

Fig. 6

EP 1 515 863 B1

**Fig. 7**

a)

A

22  21

23

22  21

A

b)

22

21

26
27

23  24

25

23

27

26

21

22

**Fig. 9**

22

21
30
31  29
32
28  28
6  5
4
29
28  28
6  4
5
29
30
31
21
22

**Fig. 8**

22

21
31
32
29  30
28  28
6  5
4
29
30
31  21
21
22

12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19630856
- WO 9119618 A
- US 3499680 A